# EUROPEAN PATENT APPLICATION

(11) **EP 4 768 784 A1**
(43) Date of publication of application: **01.07.2026**
(21) Application number: 25223148.5
(22) Date of filing: 12.12.2025
(51) Int. Cl.: F22B 1/28

(54) **HEATING DEVICE FOR A STEAM GENERATOR**

(30) Priority: 13.12.2024 CN 202423091713 U
(71) Applicant: Yuyao Hengxi Technology Co., Ltd., Yuyao City Zhejiang (CN)
(72) Inventor: Zhu, Wenjie, Yuyao City (CN)
(74) Representative: Chung, Hoi Kan

(57) **Abstract**

The utility model belongs to the technical field of steam generators, and specifically relates to a heating device for a steam generator. The heating device comprises a first heater and a second heater connected to the first heater. A first electric heating tube is disposed inside the first heater. A first water outlet is provided on an upper end or a lower end of the first heater. A second electric heating tube is disposed inside the second heater. A water inlet of the second electric heating tube is arranged to be in communication with the first water outlet. A mounting hole for installing a temperature sensor is provided on a bottom portion of the first heater. Through the design of the two heaters, the utility model enables simultaneous heating of water inside the heaters via the two electric heating tubes, thereby increasing the heating speed, rapidly generating steam, reducing energy consumption, and significantly improving efficiency.

## Description

### Technical Field

The utility model relates to the technical field of steam generators, and in particular, relates to a heating device for a steam generator.

### Background Technology

A steam generator is a device that heats water through a heating device to cause the water to be heated and evaporate into water vapor. It can be used on various equipment requiring water vapor, such as steam ovens, steam mops, and steam cleaners. Existing electrically heated steam generators generally include a thermally conductive housing, wherein a water inlet and a steam outlet are provided on the housing, and an electric heating tube is provided on one side of the housing. The electric heating tube generates heat when energized, causing the entire housing to heat up. Water entering from the water inlet absorbs heat and turns into steam, which is then discharged from the steam outlet. Since only one electric heating tube is disposed inside for heating, this type of steam generator has a slow heating speed and a slow steam production rate.

### Summary of the Utility Model

An object of the utility model is to provide a heating device for a steam generator, which solves the problem of slow heating speed by arranging two heaters.

The object of the utility model is achieved as follows: A heating device for a steam generator, comprising a cover plate, a first heater, and a second heater connected to the first heater, wherein a first electric heating tube is disposed inside the first heater, a first water outlet is provided on an upper end, a lower end, or a side end of the first heater, a second electric heating tube and a gas-liquid channel are disposed inside the second heater, a water inlet of the gas-liquid channel is arranged to be in communication with the first water outlet, and a water injection port is provided on a top portion of the first heater.

Preferably, the second heater is installed on a side portion of the first heater or the second heater is partially disposed in an inner cavity of the first heater, and the second heater is integrally formed with the first heater.

Preferably, a check valve is installed on an upper end of the first heater.

Preferably, a pressure relief valve is installed on an upper end of the first heater.

Preferably, a pressure switch is installed on an upper end of the first heater.

Preferably, a first mounting position for mounting a first temperature controller is

formed on a lower end face of the first heater.

Preferably, a first mounting base for mounting a first fuse is formed on a lower end face of the first heater.

Preferably, a second mounting position for mounting a second temperature controller is formed on a side face of the second heater.

Preferably, a second mounting base for mounting a second fuse is formed on a side face of the second heater.

Preferably, a mounting hole for installing a temperature sensor is provided on a bottom portion or a side face of the first heater.

Preferably, the gas-liquid channel is arranged as a water pipe or designed as a groove. Preferably, the water pipe is wound into turns having a flat shape.

Preferably, screw holes are provided on the cover plate, and a sealing ring is provided below the cover plate.

Preferably, a power supply for the first electric heating tube is configured to be a mains power supply, and a supply voltage is configured to be 100 V-120 V or 220 V-240 V, and a power supply for the second electric heating tube is configured to be a battery, and a supply voltage is configured to be less than 78 V.

The prominent and beneficial technical effects of the utility model compared with the prior art are:
Through the design of the two heaters, the utility model enables simultaneous heating of water inside the heaters via the two electric heating tubes, thereby increasing the heating speed, rapidly generating steam, reducing energy consumption, and significantly improving efficiency.

### Brief Description of the Drawings

FIG. 1 is a first stereoscopic structural schematic diagram of the utility model.
FIG. 2 is a first bottom structural schematic diagram of the utility model.
FIG. 3 is a second stereoscopic structural schematic diagram of the utility model.
FIG. 4 is a second bottom structural schematic diagram of the utility model.
FIG. 5 is a third stereoscopic structural schematic diagram of the utility model.
FIG. 6 is a first exploded structural schematic diagram of some components of the utility model.

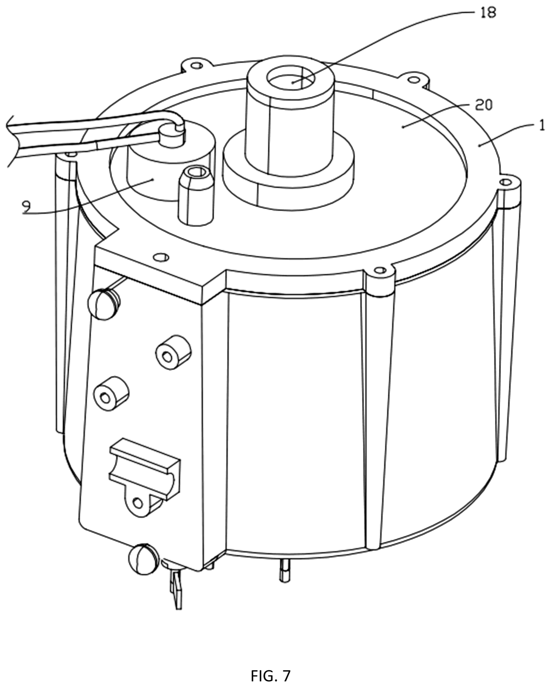

FIG. 7 is a fourth stereoscopic structural schematic diagram of the utility model.

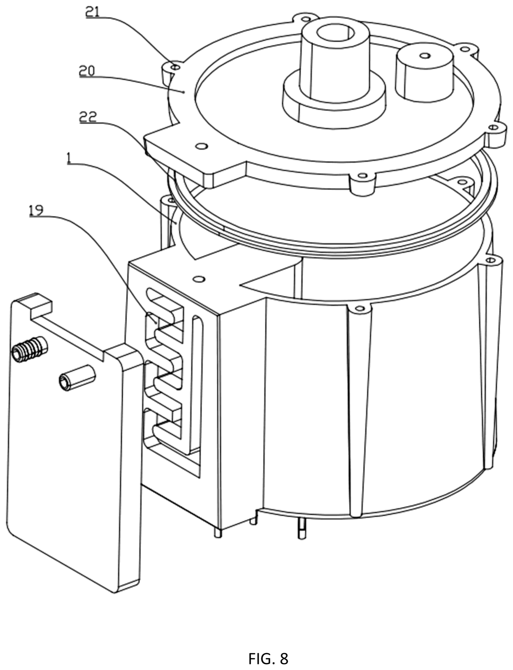

FIG. 8 is a second exploded structural schematic diagram of some components of the utility model.

Reference numerals in the accompanying drawings are indicated as below:
1 - first heater; 2 - second heater; 3 - first electric heating tube; 4 - first water outlet; 5 - second electric heating tube; 6 - mounting hole; 7 - check valve; 8 - pressure relief valve; 9 - pressure switch; 10 - first temperature controller; 11 - first mounting position; 12 - first fuse; 13 - first mounting base; 14 - second temperature controller; 15 - second mounting position; 16 - second fuse; 17 - second mounting base; 18 - water injection port; 19 - gas-liquid channel; 20 - cover plate; 21 - screw holes; 22 - sealing ring.

### Specific Embodiments

The specific embodiments of the utility model are further described in detail below with reference to the accompanying drawings.

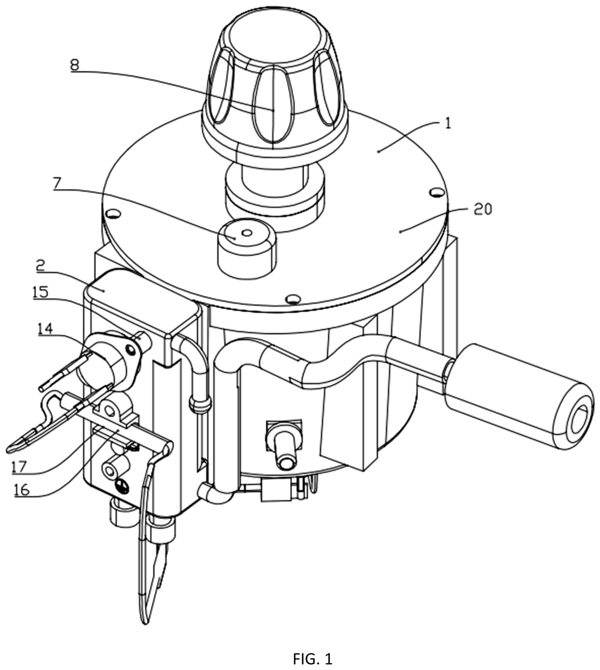

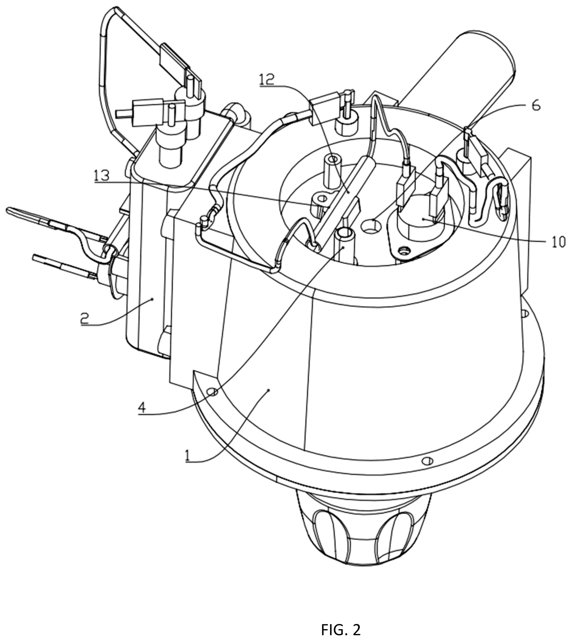

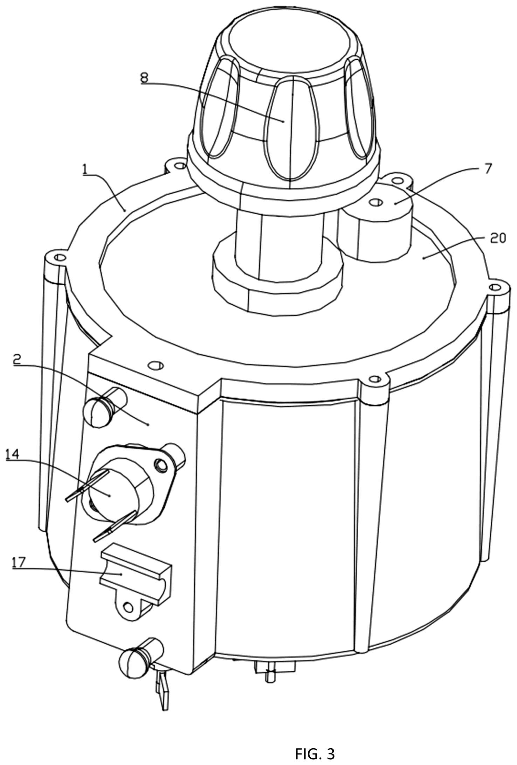

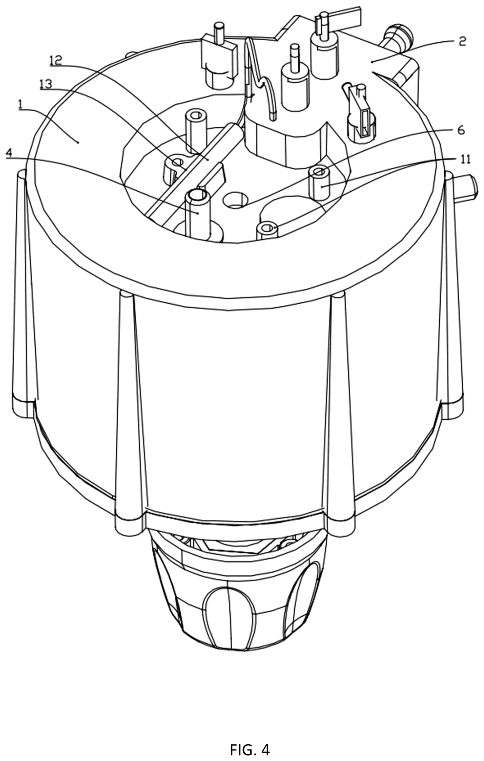

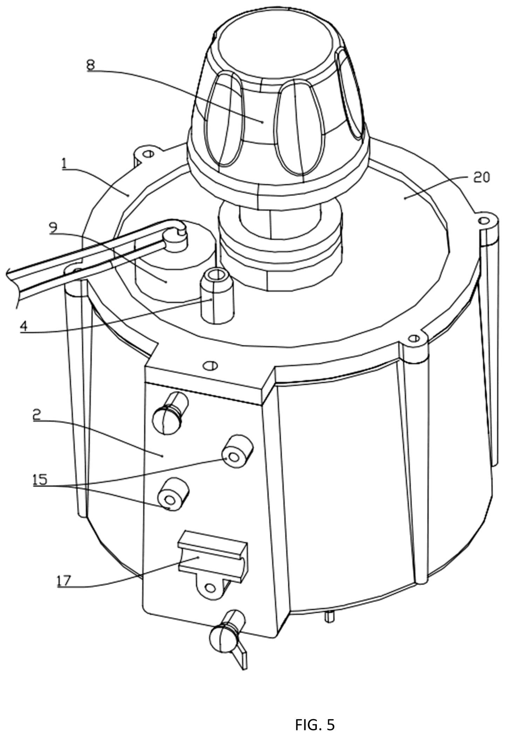

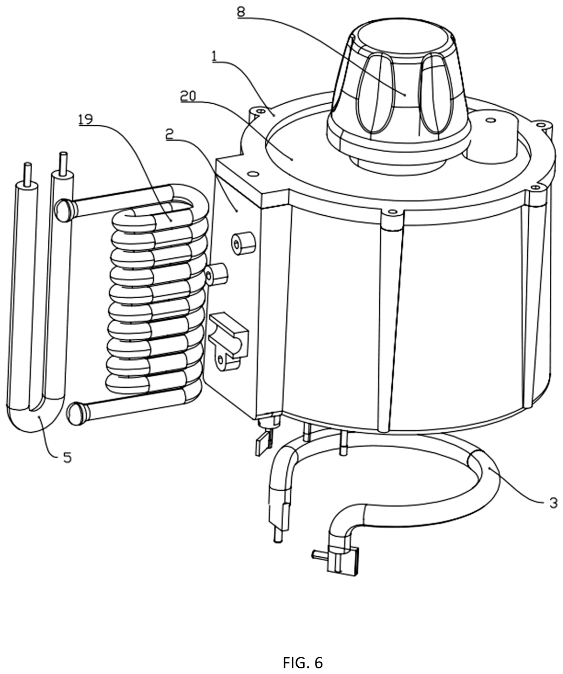

With reference to FIG. 1-6, a heating device for a steam generator comprises a first heater 1 and a second heater 2 connected to the first heater 1. A first electric heating tube 3 is disposed inside the first heater 1. A first water outlet 4 is provided on an upper end or a lower end of the first heater 1. A second electric heating tube 5 and a gas-liquid channel 19 are disposed inside the second heater 2. A water inlet of the gas-liquid channel 19 is arranged to be in communication with the first water outlet 4. A mounting hole 6 for installing a temperature sensor is provided on a bottom portion of the first heater 1. The temperature of the liquid inside the heater is detected in real time through the temperature sensor, thereby controlling it.

Through the design of the two heaters, the utility model enables simultaneous heating of water inside the heaters via the two electric heating tubes, thereby increasing the heating speed, rapidly generating steam, reducing energy consumption, and significantly improving efficiency.

A check valve 7 is installed on an upper end of the first heater 1. When the internal negative pressure reaches a certain value, the check valve 7 allows air to enter inward.

A pressure relief valve 8 is installed on an upper end of the first heater 1. When the internal pressure is too high, the pressure relief valve 8 releases pressure, allowing air to exhaust outward, thereby maintaining balanced internal air pressure.

A pressure switch 9 is installed on an upper end of the first heater 1, achieving detection, display, alarm, and control signal output for medium pressure signals.

A first mounting position 11 for mounting a first temperature controller 10 is formed on a lower end face or a side face of the first heater 1. The first temperature controller 10 is used for controlling the switching of the first electric heating tube 3 inside the first heater 1.

A first mounting base 13 for mounting a first fuse 12 is formed on a lower end face of the first heater 1. When the temperature of the first heater 1 is too high and exceeds a critical value of the fuse, the circuit of the first heater 1 can be promptly disconnected through the first fuse 12, improving safety.

A second mounting position 15 for mounting a second temperature controller 14 is formed on a side face of the second heater 2. The second temperature controller 14 is used for controlling the switching of the second electric heating tube 5 inside the second heater 2.

The gas-liquid channel 19 can adopt a spiral stainless steel flat water pipe design, achieving step-by-step heating of the water flow and increasing the heating speed. Alternatively, the gas-liquid channel 19 can be formed by a grooved structure inside the second heater 2 sealed with a cover plate.

A second mounting base 17 for mounting a second fuse 16 is formed on a side face of the second heater 2. When the temperature of the second heater 2 is too high and exceeds a critical value of the fuse, the circuit of the second heater 2 can be promptly disconnected through the second fuse 16, improving safety.

The second heater 2 is installed on a side portion of the first heater 1 or a portion of the second heater 2 is disposed in an inner cavity of the first heater 1, and the second heater 2 is integrally formed with the first heater 1.

A water injection port 18 is provided on a top portion of the first heater 1 to facilitate injecting water into the first heater 1 through the water injection port 18.

Screw holes 21 are provided on the cover plate 20, and a sealing ring 22 is provided below the cover plate, which can improve the sealing effect.

A power supply for the first electric heating tube 3 is configured to be a mains power supply, and a supply voltage is configured to be 100 V-120 V or 220 V-240 V. A power supply for the second electric heating tube 5 is configured to be a battery, and a supply voltage is configured to be less than 78 V.

The basic principles, main features, and advantages of the utility model are shown and described above. Those skilled in the art should understand that the utility model is not limited by the aforementioned embodiments. What is described in the aforementioned embodiments and the specification only illustrates the principles of the utility model. Without departing from the spirit and scope of the utility model, the utility model will also have various changes and improvements, all of which fall within the scope of the claimed utility model. The scope of protection claimed for the utility model is defined by the appended claims and their equivalents.

## Claims

1. A heating device for a steam generator, comprising a cover plate (20), a first heater (1), and a second heater (2) connected to the first heater (1), wherein a first electric heating tube (3) is disposed inside the first heater (1), a first water outlet (4) is provided on an upper end, a lower end, or a side end of the first heater (1), a second electric heating tube (5) and a gas-liquid channel (19) are disposed inside the second heater (2), a water inlet of the gas-liquid channel (19) is arranged to be in communication with the first water outlet (4), and a water injection port (18) is provided on a top portion of the first heater (1).

2. The heating device for a steam generator according to claim 1, wherein the second heater (2) is installed on a side portion of the first heater (1) or the second heater (2) is partially disposed in an inner cavity of the first heater (1), and the second heater (2) is integrally formed with the first heater (1).

3. The heating device for a steam generator according to claim 1, wherein a check valve (7) is installed on an upper end of the first heater (1).

4. The heating device for a steam generator according to claim 1 or 3, wherein a pressure relief valve (8) is installed on an upper end of the first heater (1).

5. The heating device for a steam generator according to claim 1 or 2, wherein a pressure switch (9) is installed on an upper end of the first heater (1).

6. The heating device for a steam generator according to claim 1, wherein a first mounting position (11) for mounting a first temperature controller (10) is formed on a lower end face of the first heater (1).

7. The heating device for a steam generator according to claim 1 or 6, wherein a first mounting base (13) for mounting a first fuse (12) is formed on a lower end face of the first heater (1).

8. The heating device for a steam generator according to claim 1, wherein a second mounting position (15) for mounting a second temperature controller (14) is formed on a side face of the second heater (2).

9. The heating device for a steam generator according to claim 1 or 8, wherein a second mounting base (17) for mounting a second fuse (16) is formed on a side face of the second heater (2).

10. The heating device for a steam generator according to claim 1, wherein a mounting hole (6) for installing a temperature sensor is provided on a bottom portion or a side face of the first heater (1).

11. The heating device for a steam generator according to claim 1, wherein the gas-liquid channel (19) is arranged as a water pipe or designed as a groove.

12. The heating device for a steam generator according to claim 11, wherein the water pipe is wound into turns having a flat shape.

13. The heating device for a steam generator according to claim 1, wherein screw holes (21) are provided on the cover plate (20), and a sealing ring (22) is provided below the cover plate.

14. The heating device for a steam generator according to claim 1, wherein a power supply for the first electric heating tube (3) is configured to be a mains power supply, and a supply voltage is configured to be 100 V-120 V or 220 V-240 V, and wherein a power supply for the second electric heating tube (5) is configured to be a battery, and a supply voltage is configured to be less than 78 V.
